(19) Europäisches Patentamt
European Patent Office
Office européen des brevets

(11) EP 2 538 726 A1

(12) EUROPEAN PATENT APPLICATION
published in accordance with Art. 153(4) EPC

(43) Date of publication:
26.12.2012 Bulletin 2012/52

(51) Int Cl.:
*H04W 40/02* (2009.01)

(21) Application number: 11777101.4

(22) Date of filing: 25.02.2011

(86) International application number:
PCT/CN2011/071283

(87) International publication number:
WO 2011/137680 (10.11.2011 Gazette 2011/45)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 06.05.2010 CN 201010164382

(71) Applicant: Huawei Technologies Co., Ltd.
Shenzhen, Guangdong 518129 (CN)

(72) Inventors:
• KE, Feng
Shenzhen
Guangdong 518129 (CN)
• ZHUANG, Hongcheng
Shenzhen
Guangdong 518129 (CN)
• FENG, Suili
Shenzhen
Guangdong 518129 (CN)

(74) Representative: Kreuz, Georg Maria et al
Huawei Technologies
Dessauerstrasse 3
80992 Munich (DE)

(54) **METHOD AND APPARATUS FOR RELAY NODE SELECTION AND POWER ALLOCATION IN WIRELESS RELAY NETWORK**

(57) Embodiments provide a method and a device for selecting a relay node and allocating power in a wireless relay network. The method includes: acquiring an energy price of each node in a wireless relay network, and link information about links between each node and its neighboring nodes, wherein the energy price is determined according to the following rule: the fewer residual energy of a node is, the higher the energy price of the node is; according to the energy price of each node and the link information, determining, in the case that each node is selected as a relay node, power allocation corresponding to a minimum value of an objective function that is based on the energy price of the node; and based on the power allocation and the energy price of each node, determining the node and power allocation corresponding to the minimum value of the objective function used when the power allocation is performed for each node as the relay node and power allocation for data transmission, respectively. The communication device of the present invention includes an acquiring module, a first determining module, and a second determining module. The method and communication device introduce a pricing policy for energy consumption in each node, thereby balancing the energy utilization efficiency and energy consumption, and increasing the lifecycle of the wireless relay network.

100

FIG. 1

EP 2 538 726 A1

**Description**

This application claims priority to Chinese Patent Application No. 201010164382.3, filed with the Chinese Patent Office on May 6, 2010, and entitled "METHOD AND DEVICE FOR RELAY NODE SELECTION AND POWER ALLOCATION IN WIRELESS RELAY NETWORK", which is hereby incorporated by reference in its entirety.

**FIELD OF THE INVENTION**

The present invention relates to a wireless communication field, and in particular, to a method and a communication device for relay node selection and power allocation in a wireless relay network.

**BACKGROUND OF THE INVENTION**

The relay technology combines the advantages of a traditional cellular network and a decentralized peer-to-peer network. In one aspect, this technology can cover users in blind and hotspot areas in a cellular network, thereby reducing the wireless transmit power, improving the quality of received signals, and greatly improving the network coverage and increasing the channel capacity; in another aspect, this technology can stabilize the network structure for simple and efficient management, and can simplify the protocol design compared with the decentralized peer-to-peer network technology. Therefore, a wireless relay network that uses the relay technology becomes one of the most promising wireless communication networks in the mobile communication field in the future.

A relay is often used to cover indoor blind communication areas, however, for operators, deploying relay often requires great efforts. Deploying and maintaining relay need to be performed by an individual or a third-party organization, and the relay node may be provided by different service providers or individuals. Therefore, in many cases, relay nodes in wireless relay network are implemented by user terminals that use battery. Relay nodes with a small battery capacity are unwilling to provide free services to other users by using their limited resources (including energy, time, and bandwidth), which affects the network lifecycle. In addition, to ensure that the network topology is stable for uninterrupted data transmission, the network lifecycle needs to be prolonged to the maximum. Therefore, a major issue facing a wireless relay network is how to efficiently prolong the network lifecycle.

Normally, when nodes in the network are invalid as energy is used up, the network topology is changed, and the data transmission function of the entire network will lose. Therefore, the network lifecycle is generally defined as the duration from the time when the network starts to work to the time when the first node uses up the energy. To prolong the lifecycle of a wireless relay network, certain schemes apply the minimum energy (Minimum Energy, MIE for short), maximum residual energy (Maximum Residual Energy, MARE for short), and maximum residual energy efficiency (Maximum Residual Energy Efficiency, MAEE for short) policies to the wireless relay network. Each of these schemes, however, is designed to optimize the counters of a certain aspect, but cannot effectively prolong the network lifecycle and therefore fails to improve the network performance.

**SUMMARY OF THE INVENTION**

As such, the technical problem to be solved in the embodiments of the present invention is to provide a method and a communication device for selecting a relay node and allocating power in a wireless relay network to balance energy utilization and node energy consumption, thereby effectively prolonging the lifecycle of the wireless relay network and improving the network performance.

To solve the preceding technical problem, on the one hand, an embodiment of the present invention provides a method for selecting a relay node and allocating power in a wireless relay network. The method includes:

acquiring an energy price of each node in a wireless relay network, and link information about links between each node and its neighboring nodes, where the energy price is determined according to the following rule: the fewer residual energy of a node is, the higher the energy price of the node is;

according to the energy price of each node and the link information, determining, in the case that each node is selected as a relay node, power allocation corresponding to a minimum value of an objective function that is based on the energy price of the node; and

based on the power allocation and energy price of each node, determining the node and power allocation corresponding to the minimum value of the objective function used when the power allocation is performed for each node as the relay node and power allocation for data transmission, respectively.

In another aspect, an embodiment provides a communication device for selecting a relay node and allocating power in a wireless relay network. The communication device includes:

an acquiring module, configured to acquire an energy price of each node in a wireless relay network, and link information about links between each node and its neighboring nodes, where the energy price is determined according to the following rule: the fewer residual energy of a node is, the higher the energy price of the node is;

a first determining module, configured to: according to the energy price of each node and the link information, determine, in the case that each node is selected as a relay node, power allocation corresponding to a minimum value of an objective function that is based on the energy price of the node; and

a second determining module, configured to: based on the power allocation and energy price of each node, determine the node and power allocation corresponding to the minimum value of the objective function used when the power allocation is performed for each node as the relay node and power allocation for data transmission, respectively.

Based on the preceding technical scheme, embodiments of the present invention determine the relay node and allocation of power by using an objective function that is based on the energy price. The energy price in the embodiments is determined according to the following rule: the fewer residual energy of a node is, the higher the energy price of the node is. Therefore, the source node preferably considers using the node with much residual energy as the relay node, thereby balancing energy consumption of each node in the entire wireless relay network. In another aspect, because the relay node and source node use the power allocation corresponding to the minimum value of the objective function, the energy utilization efficiency of the nodes is improved. Therefore, the embodiments of the present invention balance improvement of energy utilization efficiency and consumption of node energy in collaborated transmission of nodes, and thereby the lifecycle of the wireless relay network is efficiently prolonged and network performance is improved.

## BRIEF DESCRIPTION OF THE DRAWINGS

To better illustrate the present invention or technical solution, the drawings that need to be used in the present invention are presented in embodiments of the present invention. It is understandable that the drawings merely provide several applications of the present invention. Those skilled in the art can acquire other drawings based on these drawings without innovative work.

FIG. 1 is a flowchart of a method for selecting a relay node and allocating power in a wireless relay network according to an embodiment of the present invention;

FIG. 2 is a schematic diagram of a collaborated transmission scheme based on time-division multiplexing that is applicable to embodiments of the present invention;

FIG. 3 is a schematic diagram of allocating power according to an embodiment of the present invention;

FIG. 4 is a flowchart of a method for selecting a relay node and allocating power in a wireless relay network according to another embodiment of the present invention;

FIG. 5 is a schematic diagram of comparison of residual energy of each node in a given wireless relay network when the method according to an embodiment of the present invention and a method according to a prior art are used;

FIG. 6 is a schematic diagram of comparison of energy utilization rate when the method according to an embodiment of the present invention and a method according to a prior art are used in a given wireless relay network;

FIG. 7 is a schematic diagram of comparison of network lifecycles when the method according to an embodiment of the present invention and a method according to a prior art are used in a given wireless relay network;

FIG. 8 is another schematic diagram of comparison of network lifecycles when the method according to the embodiment of the present invention and the method according to the prior art are used in the given wireless relay network;

FIG. 9 is a structural schematic diagram of a communication device for selecting a relay node and allocating power in a wireless relay network according to an embodiment of the present invention; and

FIG. 10 is a structural schematic diagram of a communication device for selecting a relay node and allocating power in a wireless relay network according to another embodiment of the present invention.

## DETAILED DESCRIPTION OF THE EMBODIMENTS

The technical solution under the present invention is described below with reference to the accompanying drawings. Evidently, the embodiments described below are for the exemplary purpose only, without covering all embodiments of the present invention. All the other embodiments acquired by those skilled in the art without creative work based on the embodiments of the present invention are protected by the present invention.

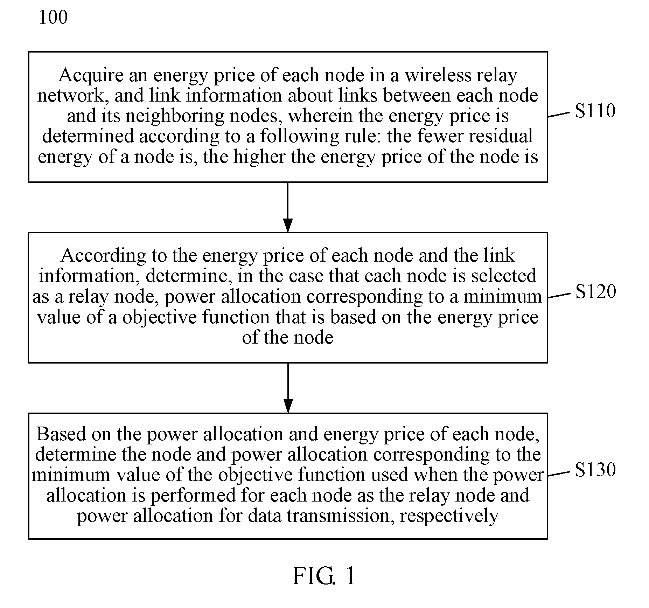

The following describes a method for selecting a relay node and allocating power in a wireless relay network according to an embodiment of the present invention with reference to FIG. 1.

As shown in FIG. 1, an embodiment of the present invention provides a method 100 for selecting a relay node and allocating power in a wireless relay network. The method includes the following steps:

S110: Acquire an energy price of each node in a wireless relay network, and link information about links between each node and its neighboring nodes, where the energy price is determined according to the following rule: the fewer residual energy of a node is, the higher the energy price of the node is.

S120: According to the energy price of each node and the link information, determine, in the case that each node is selected as a relay node, power allocation corresponding to a minimum value of an objective function that is based on the energy price of the node.

S 130: Based on the power allocation and energy price of each node, determine a node and power allocation corresponding to the minimum value of the objective function used when the power allocation is performed for each node as the relay node and power allocation for data transmission, respectively.

When a user equipment in a wireless relay network needs to upload data to a base station, or a base station needs to transmit data to a user equipment, or other nodes in the wireless relay network need to transmit data between each other, a source node may acquire an energy price of each node in the network, and link information about links between each node and its neighboring nodes, where the energy price is determined according to the following rule: the fewer residual energy of a node is, the higher the energy price of the node is. Then, assuming that each node is selected as a relay node, the source node, based on the energy price of each node and information about each link, determines, for each node, power allocation corresponding to the minimum value of the objective function that is based on the energy price of the node. In this way, the power allocation of each node is acquired. Then, the source node, according to the determined power allocation and the energy price of each node, determines a node corresponding to the minimum value of the objective function used when the power allocation is performed for each node as the relay node, and determines power allocation corresponding to the node as the power allocation for data transmission. As such, the source node can perform data transmission according to the determined relay node and power allocation.

By using the method for selecting a relay node and allocating power in a wireless relay network according to the embodiment of the present invention, for each node, the power allocation when each node is selected as the relay node is determined based on the objective function of the energy price, the minimum value of the objective function used when the power allocation is performed for each node is determined based on the determined power allocation, the node corresponding to the minimum value is determined as the relay node, and the power allocation corresponding to the node is determined as the power allocation for data transmission. The energy price in this embodiment is determined according to the following rule: the fewer residual energy of a node is, the higher the energy price of the node is. Therefore, the source node preferably considers using the node with much residual energy as the relay node, thereby balancing energy consumption of each node in the entire wireless relay network. In another aspect, because the relay node and source node use the power allocation corresponding to the minimum value of the objective function, the energy utilization efficiency of the nodes is improved. Therefore, the embodiments of the present invention balance improvement of energy utilization efficiency and consumption of node energy in collaborated transmission of nodes, and thereby the lifecycle of the wireless relay network is efficiently prolonged and network performance is improved.

Specifically, in S110, the source node acquires the energy price of each node in the wireless relay network, and the link information about links between each node and its neighboring nodes, where the energy price is determined according to the following rule: the fewer residual energy of a node is, the higher the energy price of the node is.

The source node may be a network side device. The network device includes but is not limited to a base station, radio network controller, radio network subsystem; the source node may also be a user equipment. The user equipment includes but is not limited to a mobile phone, laptop computer, personal digital assistant, portable game console, and portable multimedia machine; or the source node may be another communication device.

The source node may acquire required energy price and required link information of each node from its own memory, or acquire the required energy price and the required link information from each node by using a known method in the art. Certainly, the source node may acquire the required energy information of each node from its own memory, or acquire the required energy price and link information from each node by using a known method in the art, and then calculate a required energy price based on the energy information to acquire the required energy price.

For example, the source node may send a request message through broadcast. Each node may respond to the request message and provide link information about the links with its neighboring nodes and its own energy information or energy price to the source node. Each node may provide link information about the links with its neighboring nodes and the energy information or energy price to the source node. The request message may be a specially defined message, or an extension of an existing message. The request message may also be other existing control messages used for requesting transmission paths. The reserved fields of these control messages are used to bear the link information and the energy information or energy price that need to be transmitted to the source node.

To prolong the lifecycle of a network, a high price must be set for the energy of a node with little residual energy, and a low price must be set for the energy of a node with much residual energy. That is, the energy price of each node is determined according to the following rule: the fewer residual energy of a node is, the higher the energy price of the node is; the more residual energy of a node is, the lower the energy price of the node is. As such, the consumption of node energy can be balanced.

In this embodiment, the energy price of each node may be determined as a price that is in proportion to the power function of the ratio of initial total energy of the node to residual energy of the node. Preferably, the energy price of each node may be determined as a price that is in proportion to the one-order or two-order power function of the ratio of the initial total energy of the node to the residual energy of the node. For example, the energy price $\rho_j$ of a node may be expressed by the following formula:

$$\rho_j = \rho_0 \left( \frac{E_j^{tot}}{E_j^{rem}} \right)^m \qquad m = 1, 2 \tag{1}$$

In the formula, $E_j^{tot}$ indicates the initial total energy of the $j^{th}$ node (including the relay node and source node) in the relay, $E_j^{rem}$ indicates the residual energy of the $j^{th}$ node before data transmission, $\rho_0$ indicates the initial energy price of the $j^{th}$ node, and m is 1 or 2.

Therefore, in an embodiment of the present invention, acquiring the energy price of each node on the wireless relay node includes: acquiring initial total energy of each node and residual energy of each node and calculating an energy price of each node; or directly acquiring an energy price of each node.

In this embodiment, the link information is information related to the links with neighboring nodes on the path. The link information may include a complex channel fading coefficient of a link, a channel gain of a link, link bandwidth, nodes at both ends of a link, and their neighboring nodes. Certainly, the link information may also include the complex channel fading coefficients or channel gains and link bandwidth of the link between the source node and the objective node and the link between the relay node and the objective node. Through the link information, information such as relevant parameters of a link and transmission quality of the link may be learned.

In S120, the source node determines, according to the energy price of each node and the link information, in the case that each node is selected as a relay node, power allocation corresponding to a minimum value of an objective function that is based on the energy price of the node.

In the embodiment of the present invention, an objective function based on the energy price of a certain node may be a linear function about the energy prices of the node and the source node, or a secondary function or power function about the energy prices of the node and the source node. Preferably, the objective function based on the energy price of a certain node is the linear function about the energy prices of the node and the source node. For example, the objective function may be a function about a sum of the energy costs consumed by the source node and the node, where the energy cost of a node is a product of the energy consumed by the node and the energy price of the node.

In another aspect, in certain cases, when different intermediate nodes are selected as a relay node, the power consumed by the source node and the energy price of the source node barely change, or slightly change. In these cases, the objective function based on the energy price of a certain node may also be only the linear function about the energy price of the node, or be a secondary function or power function about the energy price of the node. For example, if a high data transmission rate is required, the source node transmits data by using the largest power regardless of which intermediate node is selected as a relay node. In this case, the source node can determine power allocation based on only the objective function about the energy price of the node that is supposedly selected as a relay node. The relay node and source node use power allocation corresponding to the minimum value of the objective function, thereby improving the energy utilization efficiency of the nodes.

In S130, the source node determines, based on the power allocation and energy price of each node, a node and power allocation that correspond to the minimum value of the objective function used when the power allocation is performed for each node as the relay node and power allocation for data transmission, respectively.

In this embodiment, the source node may calculate the objective function used when the power allocation is performed for each node based on the power allocation when each node is selected as the relay node, select the minimum value from all values of the objective function, determine the node corresponding to the minimum value as the relay node, and determine the power allocation corresponding to this node as the power allocation for data transmission. Certainly, the source node may calculate a value of the objective function used when the power allocation is performed for a node, and compare the value of the objective function with the values of the objective function for other nodes in the power allocation to find the minimum value, and determine the relay node and power allocation. In addition, other methods known in the art may be used to determine the minimum value of the objective function and determine the relay node and power allocation.

It should be noted that, for a certain node, a value of the objective function used when the power allocation is performed for the node is already the minimum value of the objective function about the energy price of the node.

Therefore, for the minimum values of the objective function used when the power allocation is performed for all nodes determined by the source node, the minimum value is the minimum value of the minimum values of objective functions of all intermediate nodes in various power.

The energy price in this embodiment is determined according to the following rule: the fewer residual energy of a node is, the higher the energy price of the node is. Therefore, the source node preferably considers using the node with much residual energy as the relay node, thereby balancing energy consumption of each node in the entire wireless relay network. In another aspect, because the relay node and source node use the power allocation corresponding to the minimum value of the objective function, the energy utilization efficiency of the nodes is improved. Therefore, the embodiments of the present invention balance improvement of energy utilization efficiency and consumption of node energy in collaborated transmission of nodes, and thereby the lifecycle of the wireless relay network is efficiently prolonged and network performance is improved.

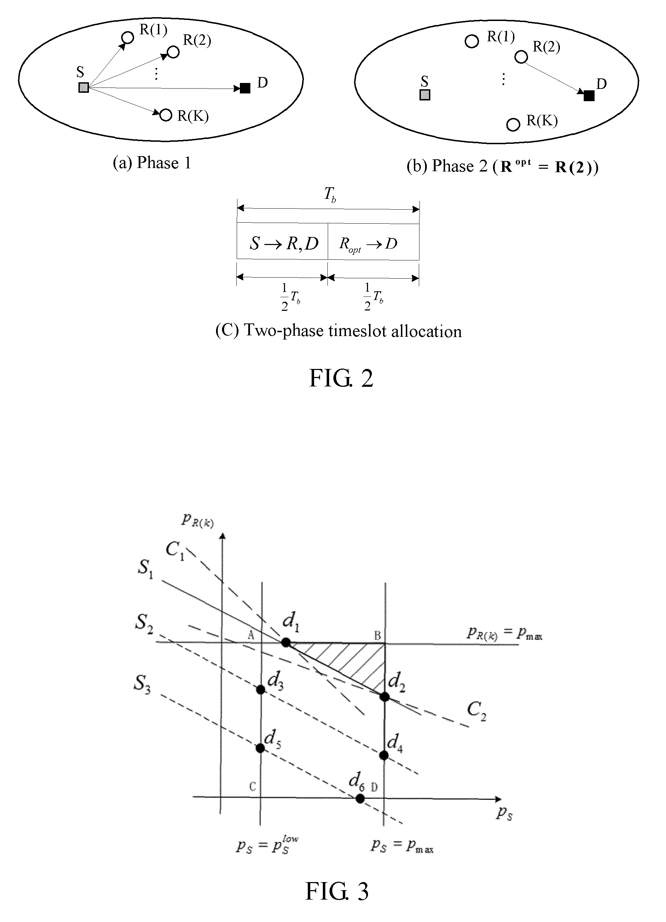

The following describes the method for selecting a relay node and allocating power in a wireless relay network with reference to FIG. 2.

FIG. 2 shows a collaborated transmission scheme based on a decoding forwarding protocol that is applicable to the present invention. As shown in FIG. 2, assuming that a wireless relay network consists of a source node S, a destination node D, and K relay nodes $R(k)(k =1\cdots K)$ distributed in different positions. A relay set is expressed by $\Omega$, and each relay in $\Omega$ can collaborate with the source node S in data transmission. Assume that channel conditions remain stable during transmission of each data block. As shown in FIG. 2(c), the collaborated transmission mechanism is based on time-division multiplexing. The length of a transmission timeslot allocated to a data block is $T_b$, and the transmission is divided into two phases. The length of each phase is $T_b/2$. In phase 1 as shown in FIG. 2(a), the source node broadcasts data to all relays and destination nodes. In phase 2 as shown in FIG. 2(b), the source node S selects an optimal relay $R^{opt}$ from the relay set $\Omega$ for collaborated transmission. That is, the selected relay performs demodulation and channel decoding on a received signal, performs channel re-encoding on the signal acquired through estimation, and then sends the signal after modulation to the destination node. The destination node combines signals received in two phases to acquire the final estimated value.

As such, two problems need to be solved. The first problem is how to select the optimal relay $R^{opt}$ from the relay set $\Omega$. The second problem is how to set the transmit power of the source node S and relay $R^{opt}$ when the required data transmission rate $l_b$ remains unchanged.

$x_s$ is used to indicate the data symbol to be sent by the source node S, and $h_{S,D}$, $h_{S,R(k)}$, and $h_{R(k),D}$ are used to indicate the complex channel fading coefficients of *link S→D,* link *S→R(k)*, and link *R(k)→D,* respectively. In addition, W is used to indicate the transmission bandwidth of the relay network. Without loss of generality, assume that the Gaussian white noises on *link S→D,* link *S→R(k)*, and link *R(k)→D* meet the following condition: $n_{S,D}, n_{S,R(k)}, n_{R(k),D} \sim CN$

$(0,\sigma^2)$. In addition, $\lambda_{S,D} = h_{S,D}^2 \big/ \sigma^2$, $\lambda_{S,R(k)} = h_{S,R(k)}^2 \big/ \sigma^2$, and $\lambda_{R(k),D} = h_{R(k),D}^2 \big/ \sigma^2$ are used to indicate the additional signal to noise rates for each unit increase of the transmission power on *link S→D,* link *S→R(k)*, and link *R(k)→D,* respectively.

Assume that the transmission rate required by data blocks in the source node is $l_b$ (bit/s). The source node needs to select an opportunity relay $R(k)$ from the relay set $\Omega$ to implement collaborated transmission and determine the transmission *power $P_s$* and $P_{R(k)}$ of the source node and relay node R(k). In the first phase, the source node S broadcasts symbol $x_s$ by using the power $p_s$ to the destination node D and relay nodes in $\Omega$. The symbols received by the destination node D and relay node $R(k)$ are as follows:

$$y_{S,D} = \sqrt{p_S}\, h_{S,D} x_S + n_{S,D} \qquad\qquad (2)$$

$$y_{S,R(k)} = \sqrt{p_S}\, h_{S,R(k)} x_S + n_{S,R(k)} \qquad\qquad (3)$$

Then, the relay $R(k)$ demodulates and decodes a received signal, re-encodes and modulates the symbol acquired through estimation, and transmits the symbol in the second phase by using the transmit power $P_{R(k)}$.

In the destination node (D), the final data is acquired through maximum-ratio combining of the signals from the source node and the relay $R(k)$. The reachable rate of the entire link depends on the minimum value of the signal to a noise rate (Signal to Noise Rate, SNR for short) of *link S→D,* link *S→R(k)*, and link *R(k)→D.* See the following formula:

$$I_b \leq \frac{1}{2} W \log_2 (1 + \min\{\lambda_{S,R(k)} p_S, \lambda_{S,D} p_S + \lambda_{R(k),D} p_{R(k)}\}) \tag{4}$$

According to formula (4), to guarantee the data transmission rate $I_b$, a lower limit $p_S^{low}$ of the transmit power of the source node S that establishes an effective link $S \rightarrow R(k)$, that is:

$$p_S^{low} = \frac{1}{\lambda_{S,R(k)}} (2^{2I_b/W} - 1) \tag{5}$$

In addition, without loss of generality, assume that the maximum transmit power of the source node and all relay nodes in $\Omega$ meets the following condition: $p_S^{max} = p_{R(1)}^{max} = \cdots = p_{R(K)}^{max} = p_{max}$.

To select a relay node and determine power allocation, a user may be regarded as a buyer who purchases energy from the source node and relay node to transmit data blocks and wants to minimize the consumed cost while maintaining the transmission rate $I_b$. The source node (S) and all nodes in $\Omega$ may be regarded as sellers who price the energy according to the amount of residual energy. In the timeslot for data block transmission, the energy consumed by the source node and that consumed by the relay nodes are $e_s = p_s T_b/2$ and $e_{R(k)} = p_{R(k)} T_b/2$, respectively. As such, a cost function may be acquired as follows:

$$C_{S,R(k)}(p_S, p_{R(k)}) = \frac{1}{2} T_b (\rho_S p_S + \rho_{R(k)} p_{R(k)}) \tag{6}$$

In formula (6), $\rho_S$ and $\rho_{R(k)}$ are the energy prices of the source node (S) and relay node $R(k)$, respectively. Assume that the pricing policy of a node meets formula (1), that is, the energy price of each node may be determined as a price that is in proportion to a one-order or two-order power function of the ratio to the initial total energy of each node and the residual energy of the node.

$(p_S^*, p_{R(k)}^*)$ indicates the solution to the optimal power allocation for acquiring the minimum cost when the relay $R(k)$ is selected. The optimal relay node that may be acquired is as follows:

$$R^{opt} = \arg \min_{R(k)} C_{S,R(k)}(p_S^*, p_{R(k)}^*) \tag{7}$$

As such, acquiring the solution to the optimal power allocation $(p_S^*, p_{R(k)}^*)$ of relay node $R(k)$ may be determined through mathematical modeling as a typical linear planning issue. Formulas (8) and (9) define the optimization objective and constraints of the issue:

$$(p_S^*, p_{R_k}^*) = \arg \min_{p_S, p_{R_k}} (\rho_S p_S + \rho_{R_k} p_{R_k}) \tag{8}$$

$$\text{s.t.} \begin{cases} \lambda_{S,D}p_S + \lambda_{R(k),D}p_{R(k)} \geq 2^{2I_b/W} - 1 \\ p_S^{low} \leq p_S \leq p_{max} \\ 0 \leq p_{R(k)} \leq p_{max} \end{cases} \quad (9)$$

The following describes how to acquire the solution to the optimal power allocation $(p_S^*, p_{R(k)}^*)$ according to formulas (8) and (9) by referring to FIG. 3.

First, to facilitate description, three relevant functions are defined in formulas (10), (11), and (12):

$$f(x,y) = \frac{W}{2}\log_2(1 + \lambda_{S,D}x + \lambda_{R(k),D}y) \quad (10)$$

$$h_1(x) = \frac{1}{\lambda_{S,D}}(2^{2I_b/W} - 1 - \lambda_{R(k),D}x) \quad (11)$$

$$h_2(x) = \frac{1}{\lambda_{R(k),D}}(2^{2I_b/W} - 1 - \lambda_{S,D}x) \quad (12)$$

As shown in FIG. 3, straight lines $S_i(i=1,2,3)$ are contour lines $\lambda_{S,D}p_S + \lambda_{R(k),D}p_{R(k)}$=2Ib/W-1 of signal to noise rates (SNRs) in different transmission rates $I_b$. The shadow region in the figure is the intersection between the rectangle ABCD and the upper right plane of $S_i$. It can be seen that, the shadow region is the feasible domain of the optimization issue defined in formula (8).

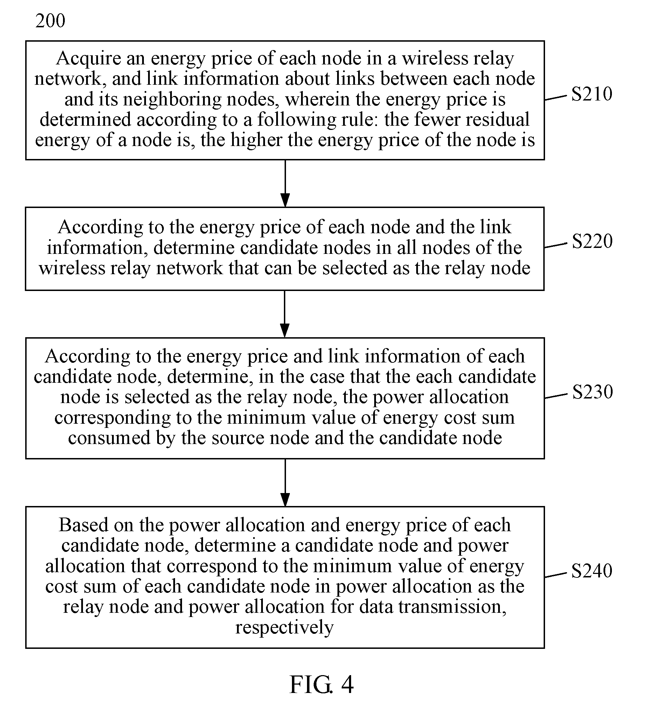

As shown in FIG. 3, the greater $I_b$ is, the closer to the upper part the position of straight line $S_i$ is, and the smaller the area of the shadow region, that is, feasible domain, is. Two ratio parameters are defined: $\eta_1 = \rho_S/\rho_{R(K)}$ and $\eta_2 = \lambda_{S,D}/\lambda_{R(k),D}$. Straight lines $C_1$ and $C_2$ are cost contour lines $\rho_S p_S + \rho_{R(k)}p_{R(k)} = 2C_{S,R(k)}/T_b$ when $\eta_1 \geq \eta_2$ and $\eta 1 < \eta 2$ As shown in FIG. 4, the closer to the lower part straight lines $C_1$ and $C_2$ are, the lower the cost $C_{S,R(k)}$ is. It can be easily known that when straight lines $C_1$ and $C_2$ are moved from the bottom to the top, the first intersection point with the feasible domain (shadow region) is the optimal power allocation solution $(p_S^*, p_{R(k)}^*)$.

When $I_b > f(p_{max}, p_{max})$ or $p_S^{low} \geq p_{max}$, as shown in FIG. 3, the area of the feasible domain is 0. This means that no valid solution to formula (8) exists. Therefore, in this case, R$(k)$ is unlikely to be selected by the user.

When $I_b < f(p_S^{low}, 0)$, as shown in FIG. 3, the feasible domain is the entire rectangle ABCD, and the optimal power allocation point is C. But because $p_{R(k)}^* = 0$, this means that the relay $R(k)$ is unlikely to be selected by the user.

When $f(p_S^{low}, 0) \leq I_b \leq f(p_{max}, p_{max})$ and $p_S^{low} < p_{max}$, as shown in FIG. 3, the area in the shadow part is not 0. The optimal power allocation solution may be acquired. In this case, two scenarios are described:

A: When $\eta 1 \geq \eta 2$

As shown in FIG. 3, the absolute value of the slope of the cost contour line $C_1$ is greater than the absolute value of the slope of the signal to noise rate (SNR) contour line $S_i$. This indicates that the energy price of the source node S is too high, and the node energy consumed by the user needs to be as low as possible. Specifically, when

$f(p_S^{low}, p_{\max}) < I_b \leq f(p_{\max}, p_{\max})$, the signal to noise rate (SNR) contour line is $S_1$, and the optimal power allocation point $d_1$ is located on the line section AB; when $f(p_S^{low}, 0) \leq I_b \leq f(p_S^{low}, p_{\max})$, the SNR contour line is $S_2$, and the optimal power allocation point $d_3$ is located on the line section AC. As such, the optimal power allocation vector may be acquired through formula (13):

$$(p_S^*, p_{R(k)}^*) = \begin{cases} (h_1(p_{\max}), p_{\max}) & f(p_S^{low}, p_{\max}) < I_b \leq f(p_{\max}, p_{\max}) \\ (p_S^{low}, h_2(p_S^{low})) & f(p_S^{low}, 0) \leq I_b \leq f(p_S^{low}, p_{\max}) \end{cases} (\eta_1 \geq \eta_2) \tag{13}$$

B: When $\eta_1 < \eta_2$

As shown in FIG. 3, the absolute value of the slope of the cost contour line $C_2$ is greater than the absolute value of the slope of the signal to noise rate (SNR) contour line $S_i$. When $f(p_{\max}, 0) \leq I_b \leq f(p_{\max}, p_{\max})$, the signal to noise rate (SNR) contour line is $S_2$, and the optimal power allocation point $d_4$ is located on the line section BD; when $f(p_S^{low}, 0) \leq I_b \leq f(p_{\max}, 0)$, the SNR contour line is $S_3$, and the optimal power allocation point $d_6$ is located on the line section CD. As such, the optimal power allocation vector may be acquired through formula (14):

$$(p_S^*, p_{R(k)}^*) = \begin{cases} (p_{\max}, h_2(p_{\max})) & f(p_{\max}, 0) < I_b \leq f(p_{\max}, p_{\max}) \\ (h_1(0), 0) & f(p_S^{low}, 0) \leq I_b \leq f(p_{\max}, 0) \end{cases} (\eta_1 < \eta_2) \tag{14}$$

As such, when a certain communication device (assuming that it is a source node) in the wireless relay network needs to send the service of which the required data sending rate requirement is $I_b$, the source node acquires the energy prices of each node in the wireless relay network, and channel gains of the link between the source node and the destination node and the link between the intermediate node and the destination node.

Assume that each intermediate node is selected as a relay node. Then, for each intermediate node, the source node acquires the channel gain $\lambda_{S,D} = h_{S,D}^2 / \sigma^2$ of the link between the source node and the destination node, the channel gain $\lambda_{R(k),D} = h_{R(k),D}^2 / \sigma^2$ of the link between the relay node and the destination node, the energy price $\rho_S$ of the source node, the energy price $\rho_{R(k)}$ of the relay node, transmission bandwidth w of the wireless relay network, and data rate requirement $I_b$. In addition, the source node calculates the minimum power that meets $I_b$ required by itself and the neighboring nodes, that is, acquires the minimum transmit power $p_S^{low}$ of the source node S that establishes an effective link $S \rightarrow R(k)$ that is, $p_S^{low} = (2^{2I_b/W} - 1)/\lambda_{S,R(k)}$, and the source node acquires its maximum transmit power $p_{\max}$ according to its capability. As such, the power allocation of each node when being selected as the relay node can be directly determined according to formula (13) and formula (14).

Then, the source node determines the optimal relay node based on formula (7) according to the power allocation and energy price of each node, and determines the power allocation corresponding to the relay node as the power allocation for data transmission.

The energy price in this embodiment is determined according to the following rule: the fewer residual energy of a node is, the higher the energy price of the node is. Therefore, the source node preferably considers using the node with much residual energy as the relay node, thereby balancing energy consumption of each node in the entire wireless relay network. In another aspect, because the relay node and source node use the power allocation corresponding to the minimum value of the objective function, the energy utilization efficiency of the nodes is improved. Therefore, the embodiments of the present invention balance improvement of energy utilization efficiency and consumption of node energy in collaborated transmission of nodes, and thereby the lifecycle of the wireless relay network is efficiently prolonged and network performance is improved. In addition, from the analysis of the solution acquiring process by referring to FIG. 3, it can be known that this embodiment can easily acquire the closed-form solution of power allocation through distributed calculation, and therefore has the advantages of few consumed calculation resources and low implementation cost. Therefore, the method according to this embodiment has the advantages of good practical performance and low cost.

The following describes a method for selecting a relay node and allocating power in a wireless relay network according to another embodiment of the present invention with reference to FIG. 4.

As shown in FIG. 4, a method 200 for selecting the relay node and allocating power in the wireless relay network according to another embodiment of the present invention includes the following steps:

S210: Acquire an energy price of each node in a wireless relay network, and link information about links between each node and its neighboring nodes, where the energy price is determined according to the following rule: the fewer residual energy of a node is, the higher the energy price of the node is.

S220: According to the energy price of each node and the link information, determine candidate nodes in all nodes of the wireless relay network that can be selected as a relay node.

S230: According to the energy price of each candidate node and link information of each candidate node, determine, in the case that each candidate node is selected as the relay node, the power allocation corresponding to the minimum value of the energy cost sum consumed by the source node and the candidate node.

S240: Based on the power allocation and energy price of each candidate node, determine a candidate node and power allocation that correspond to the minimum value of energy cost sum of each candidate node in power allocation as the relay node and power allocation for data transmission, respectively.

In this embodiment, the source node preliminarily selects nodes in the wireless relay network after acquiring the energy price and link information, and eliminates the nodes that cannot be selected as a relay node to acquire candidate nodes that are possible to serve as a relay node. Then, for each candidate node, the source node determines power allocation when each candidate is selected as a relay node based on the objective function of the energy price, determines the minimum value of the energy cost sum of each candidate node during power allocation based on the determined power allocation and energy price, determines the candidate node corresponding to the minimum value as the relay node, and determines the power allocation corresponding to the relay node as the power allocation for data transmission.

This embodiment of the present invention determines the selection of the relay node and allocation of power by using an objective function that is based on the energy price. The energy price in the embodiment is determined according to the following rule: the fewer residual energy of a node is, the higher the energy price of the node is. Therefore, the source node preferably considers using the node with much residual energy as the relay node, thereby balancing energy consumption of each node in the entire wireless relay network. In another aspect, because the relay node and source node use the power allocation when the energy cost sum is the minimum, the energy utilization efficiency of the nodes is improved. Therefore, the embodiments of the present invention balance improvement of energy utilization efficiency and consumption of node energy in collaborated transmission of nodes, and thereby the lifecycle of the wireless relay network is efficiently prolonged and network performance is improved. In another aspect, this embodiment filters all nodes in the wireless relay network and eliminates the nodes that cannot be selected as the relay node, thereby avoiding subsequent calculation processing for these nodes, greatly saving the calculation resources, improving the system processing speed, and therefore further improving the performance of the wireless relay network.

In S220, according to the energy price of each node and the link information, the source node can determine the candidate nodes that can be selected as the relay node from all nodes of the wireless relay network by using a plurality of methods, for example, based on the link validity, data transmission requirements, and rule of saving the energy cost.

For example, the source node can calculate the minimum transmit power $p_S^{low}$ required by itself and neighboring nodes that meets $I_b$, that is, $p_S^{low} = (2^{2I_b/W} - 1)/\lambda_{S,R(k)}$, and the source node acquires its maximum sending power $p_{max}$ according to its capability. In this case, the minimum transmit power $p_S^{low}$ of the source node acquired through calculation can be compared with the maximum sending power $p_{max}$. When $p_S^{low} \geq p_{max}$, the $S \rightarrow R(k)$ link established between the source node and the node is not a valid link, and cannot implement effective data transmission, that is, this node is unlikely to be selected as the relay node.

As another example, according to the energy price of each node and the link information of each node, the source node calculates the function values $f(p_{max}, p_{max})$ and $f(p_s^{low}, 0)$, and then compares the function values with the transmission rate $I_b$ required by the data block to be sent, thereby determining the candidate nodes that can be selected as the relay node. As shown in FIG. 3, when $Ib>f(p_{max},p_{max})$, the SNR contour line S is located in the upper part of the entire rectangular region, and the area of the feasible domain is 0. This indicates that the required data transmission rate is too high. In this case, this node is unlikely to be selected by the user as a candidate node; when

$$I_b < f(p_S^{low},0)$$,

the SNR contour line S is located in the lower part of the entire rectangular region, the feasible domain is the entire rectangle ABCD, and the optimal power allocation point is C. The power of the relay node, however, is

$$p_{R(k)}^* = 0$$.

This means that this node is not required. As such, this node is unlikely to be selected by the user as a candidate node.

As another example, the source node can calculate the cost consumed in direct transmission and the cost consumed through an intermediate node for transmission. If the energy cost consumed through an intermediate node for transmission is higher, it is unnecessary to use this intermediate node for collaborated transmission. As such, all nodes in the wireless relay network can be filtered to determine the candidate nodes that can be selected as the relay node.

Certainly, the source node may determine the candidate nodes that may be selected as a relay node from all nodes in the wireless relay network based on one or a combination of a plurality of the preceding methods, or based on certain methods known to those skilled in the art, thereby effectively prolonging the lifecycle of the wireless relay network, and further improving the performance of the wireless relay network.

In addition, other operations and/or steps of method 200 can refer to relevant parts in the preceding method 100. To avoid repetition, these operations or steps are not described here.

To verify that the policy of the present patent application can improve the energy utilization efficiency and balance node energy consumption, the following simulation experiment is performed to compare the minimum cost (Minimum Cost, MIC for short) policy according to this embodiment of the present invention with the minimum energy consumption (MIE) policy, maximum residual energy (MARE) policy, and maximum residual energy efficiency (MAEE) policy in the prior art. In the following simulation experiment, the set wireless relay network considers the following scenario: 25 nodes are evenly distributed in a rectangular area, the distance between neighboring nodes is 50 meters, and the channels between nodes are Rayleigh fading channels overlaid with Gaussian white noise. Without loss of generality, assume that the noise power spectrum density of all channels is as follows: $N_0=10^{-14}$ (W/Hz). Assume that the parameter timeslot length $T_b=10^{-3}$ (s), the bandwidth is $W=1M$ (Hz), initial energy of each node is 5 (J), and the maximum transmit power is 0.1 (W). Assume that in each timeslot, only one source node is selected at random to send information and the destination node is selected at random or determined as an intermediate node. The case where the destination node is an intermediate node is similar to the case where a UE accesses a base station through collaboration. Other cases involve communication between UEs.

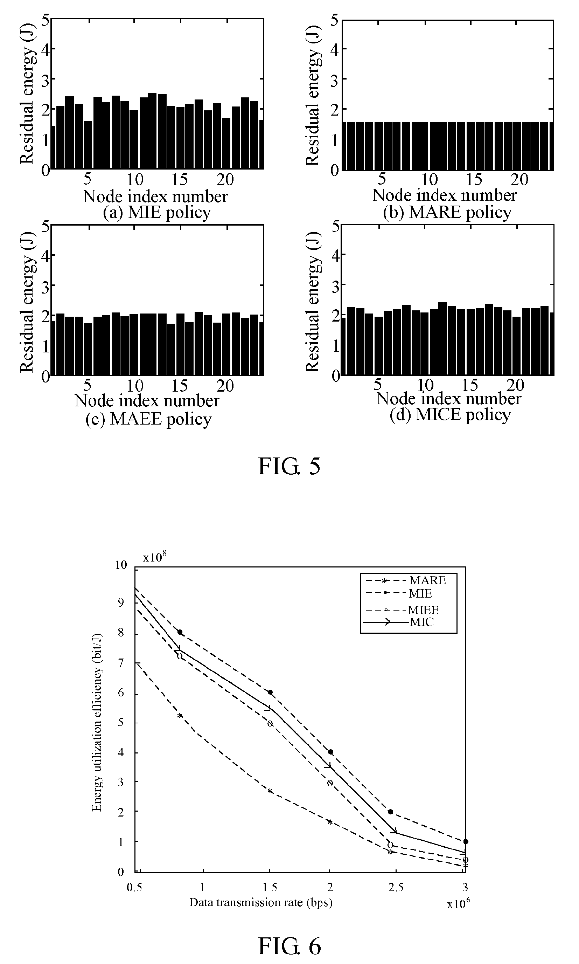

FIG. 5 shows residual energy distribution of each node except the destination node in each policy when the destination node is set as an intermediate node, a data transmission rate as 2.5M (bps), and network runtime as $T=1000$ (s). The horizontal axis indicates a node index number, and the vertical axis indicates the residual energy (in the unit of J). As shown in the figure, the MIE policy ensures that the energy required in each transmission is the minimum but cannot balance the energy consumption of each node; the MARE policy and MAFE policy can balance the energy consumption of each node, but provide poor energy utilization efficiency. Compared with other policies, the MIC policy can make an effective compromise between energy utilization efficiency and energy consumption of each node, and therefore help prolong the lifecycle of the entire network.

FIG. 6 compares energy utilization efficiency between the method according to the present invention and the method according to the prior art in a given wireless relay network. The number of bits that can be transmitted per Joule (J) is used as the standard for measuring the energy utilization efficiency. The horizontal axis indicates the data transmission rate (in the unit of bps), and the vertical axis indicates the energy utilization efficiency (in the unit of bps/J). As shown in FIG. 6, the energy utilization efficiency of the MIC policy proposed in the present invention is close to that of the MIE policy with the highest energy utilization efficiency and higher than that of the MARE policy and MAFE policy.

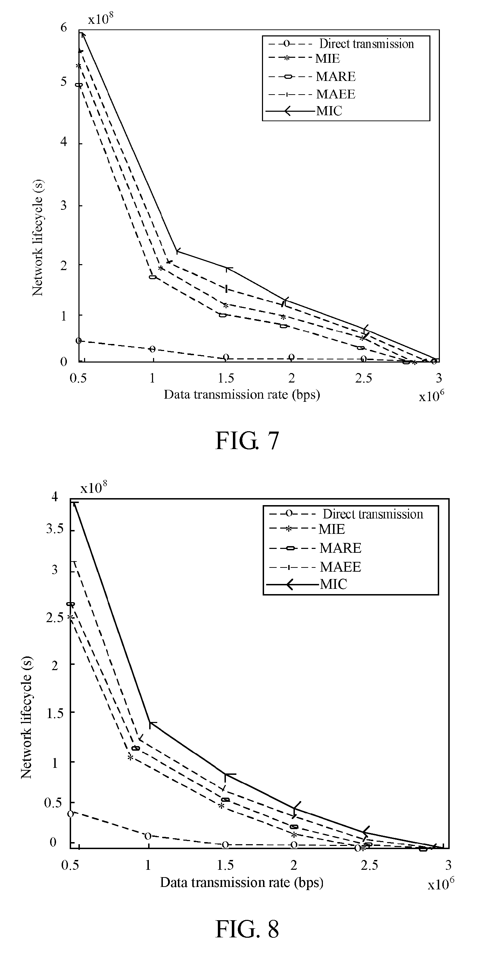

To help observe the effects of each policy in prolonging of the wireless relay network, the lifecycle of the wireless relay network is evaluated when different policies are used in the case that the data transmission rate is different. FIG. 7 is a schematic diagram of comparison of the lifecycles of the network when the destination node is selected at random. FIG. 8 is a schematic diagram of comparison of the lifecycles of the network when the destination node is a center node. The lifecycle of the network is defined as the duration from the time when the network starts to work to the time when the first node uses up the energy. As shown in FIG. 7 and FIG. 8, the lifecycle of the network when the MIC policy is used is obviously longer than that when other policies are used especially in the case that the destination node is a center node. This is because in this case, the data transmission load is not balanced among nodes in the network, and therefore the comprehensive advantage of the MIC policy in making a compromise between the energy utilization efficiency and the energy consumption of nodes is fully embodied. For example, when the data transmission rate is 1M (bps), the lifecycle of the network when the MIC policy is used is more than 10 times longer than that in direct transmission, and over 20% longer than that when the MAFE policy whose performance is closest to the MIC policy is used.

This helps explain that the method for selecting a relay node and allocating power in a wireless relay network according to the embodiment of the present invention makes a compromise between energy utilization efficiency and energy consumption of nodes in collaborated transmission of nodes, thereby effectively prolonging the lifecycle of the wireless relay network and improving network performance.

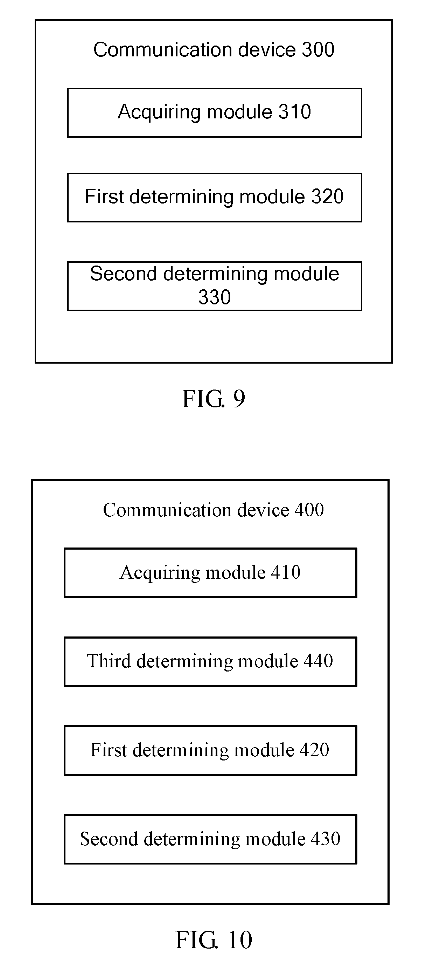

The preceding describes the method for selecting a relay node and allocating power in a wireless relay network according to the embodiment of the present invention. The following describes a communication device for selecting a relay node and allocating power in a wireless relay network according to an embodiment of the present invention with reference to FIG. 9 and FIG. 10.

FIG. 9 is a structural schematic diagram of a communication device 300 for selecting a relay node and allocating power in a wireless relay network according to an embodiment of the present invention.

The communication device 300 includes an acquiring module 310, a first determining module 320, and a second determining module 330, where the acquiring module 310 is configured to acquire an energy price of each node in a wireless relay network, and link information about links between each node and its neighboring nodes, where the energy price is determined according to the following rule: the fewer residual energy of a node is, the higher the energy price of the node is; the first determining module 320 is configured to, according to the energy price of each node and the link information, determine, in the case that each node is selected as a relay node, power allocation corresponding to a minimum value of an objective function that is based on the energy price of the node; and the second determining module 330 is configured to, based on the power allocation and energy price of each node, determine a node and power allocation that correspond to the minimum value of the objective function used when the power allocation is performed for each node as the relay node and power allocation for data transmission, respectively.

The preceding and other operations and/or functions of the acquiring module 310, first determining module 320, and second determining module 330 can refer to relevant parts of the preceding method 100 and/or 200, and are not described here.

The communication device according to the embodiment of the present invention determines the selection of the relay node and allocation of power by using an objective function that is based on the energy price. The energy price in the embodiments is determined according to the following rule: the fewer residual energy of a node is, the higher the energy price of the node is. Therefore, the source node preferably considers using the node with much residual energy as the relay node, thereby balancing energy consumption of each node in the entire wireless relay network. In another aspect, because the relay node and source node use the power allocation corresponding to the minimum value of the objective function, the energy utilization efficiency of the nodes is improved. Therefore, the embodiments of the present invention balance improvement of energy utilization efficiency and consumption of node energy in collaborated transmission of nodes, and thereby the lifecycle of the wireless relay network is efficiently prolonged and network performance is improved.

In this embodiment, the acquiring module 310 can further be configured to acquire the energy price of each node in the wireless relay network and link information about links between each node and neighboring nodes, where the energy price of each node can be determined as a price that is in proportion to the power function of the ratio of initial total energy of each node to residual energy of the node. In another embodiment, the acquiring module 310 can further be configured to acquire the energy price of each node in the wireless relay network and link information about links between each node and neighboring nodes, where the energy price of each node can be determined as a price that is in proportion to the one-order or two-order power function of the ratio of the initial total energy of each node to the residual energy of the node. In addition, in another embodiment of the present invention, the first determining module 320 can further be configured to, according to the energy price of each node and the link information, determine, in the case that each node is selected as a relay node, power allocation corresponding to the minimum value of the energy cost sum consumed by the source node and this node.

FIG. 10 is a structural schematic diagram of a communication device 400 for selecting a relay node and allocating power in a wireless relay network according to another embodiment of the present invention.

The communication device 400 includes an acquiring module 410, a third determining module 440, a first determining module 420, and a second determining module 430, where the acquiring module 410 is configured to acquire an energy price of each node in a wireless relay network, and link information about links between each node and its neighboring nodes, where the energy price is determined according to the following rule: the fewer residual energy of a node is, the higher the energy price of the node is; the third determining module 440 is configured to determine candidate nodes that can be selected as a relay node from the nodes in the wireless relay network according to the energy price of each node and the link information; the first determining module 420 is configured to, according to the energy price of each candidate node and link information of each candidate node, determine, in the case that each candidate node is selected as the relay node, power allocation corresponding to a minimum value of the energy cost sum consumed by the source node and the candidate node; and the second determining module 430 is configured to, based on the power allocation and energy price of each candidate node, determine a candidate node and power allocation that correspond to the minimum value of the energy cost sum used when the power allocation is performed for each candidate node as the relay node and power allocation for data transmission, respectively.

The preceding and other operations and/or functions of the acquiring module 410, third determining module 440, first determining module 420, and second determining module 430 can refer to relevant parts of the preceding method 100 and/or 200, and are not described here.

The communication device according to the embodiment of the present invention determines the selection of the relay node and allocation of power by using an objective function that is based on the energy price. The energy price in the embodiments is determined according to the following rule: the fewer residual energy of a node is, the higher the energy price of the node is. Therefore, the source node preferably considers using the node with much residual energy as the relay node, thereby balancing energy consumption of each node in the entire wireless relay network. In another aspect, because the relay node and source node use the power allocation when the energy cost sum is the minimum, the energy utilization efficiency of the nodes is improved. Therefore, the embodiment of the present invention balances improvement of energy utilization efficiency and consumption of node energy in collaborated transmission of nodes, and thereby the lifecycle of the wireless relay network is efficiently prolonged and network performance is improved. In another aspect, the communication device according to this embodiment filters all nodes in the wireless relay network and eliminates the nodes that cannot be selected as the relay node, thereby avoiding subsequent calculation processing for these nodes, greatly saving the calculation resources, improving the system processing speed, and therefore further improving the performance of the wireless relay network.

Those skilled in the art can understand that the units and steps in each example described in the public embodiments of the present invention can be implemented by electronic hardware, computer software, or combination of both. To clearly describe the changeability of the hardware and software, the composition and steps of each example are generally described according to functions in the preceding description. Whether these functions are executed through hardware or software depends on the specific applications and design constraints of the technical scheme. Those skilled in the art can use different methods to implement the described functions for each specific application. However, such implementation should not be considered as beyond the scope of the present invention.

The methods or steps described in the embodiments of the present invention can be implemented by hardware, software modules executed by the processor, or a combination of both. The software program can be placed in a random access memory (RAM), memory, read only memory (ROM), electrically programmable ROM, electrically erasable and programmable ROM, register, hard disk, mobile disk, CD-ROM, or any other form of storage medium known to the technical domain.

Drawings and preferred embodiments are applied to describe the present invention. However, the present invention is not confined to these drawings and embodiments. Without departing from the spirit and essential of the present invention, those skilled in the art can make various equivalent modifications or replacements to the embodiments of the present invention. These modifications or replacements shall fall within the protection scope of the present invention.

## Claims

1. A method for selecting a relay node and allocating power in a wireless relay network, comprising:

   acquiring an energy price of each node in a wireless relay network, and link information about links between each node and its neighboring nodes, wherein the energy price is determined according to the following rule: the fewer residual energy of a node is, the higher an energy price of the node is;
   according to the energy price of each node and the link information, determining, in the case that each node is selected as a relay node, power allocation corresponding to a minimum value of an objective function that is based on the energy price of the node; and
   based on the power allocation and energy price of each node, determining a node and power allocation corresponding to the minimum value of the objective function used when the power allocation is performed each node as the relay node and power allocation for data transmission, respectively.

2. The method according to claim 1, wherein the acquiring the energy price of each node in the wireless relay network, and link information about links between each node and its neighboring nodes, wherein the energy price is determined according to the following rule: the fewer residual energy of a node is, the higher the energy price of the node comprises:

   acquiring the energy price of each node in the wireless relay network and link information about links between each node and its neighboring nodes, wherein the energy price can be determined as a price that is in proportion to a power function of a ratio of initial total energy of the node to residual energy of the node.

3. The method according to claim 2, wherein the acquiring the energy price of each node in the wireless relay network, and link information about links between each node and its neighboring nodes, wherein the energy price is determined according to the following rule: the fewer residual energy of a node is, the higher the energy price of the node comprises:

acquiring the energy price of each node in the wireless relay network and link information about links between each node and its neighboring nodes, wherein the energy price can be determined as a price that is in proportion to a one-order or two-order power function of the ratio of the initial total energy of the node to residual energy of the node.

4. The method according to any one of claims 1 to 3, wherein the acquiring the energy price of each node in the wireless relay network comprises:

acquiring initial total energy of each node and residual energy of each node, and calculating the energy price of each node; or
directly acquiring the energy price of each node.

5. The method according to any one of claims 1 to 3, wherein the according to the energy price of each node and the link information, determining, in the case that each node is selected as the relay node, power allocation corresponding to the minimum value of the objective function that is based on the energy price of the node comprises:

according to the energy price of each node and the link information, determining, in the case that each node is selected as the relay node, the power allocation corresponding to the minimum value of a energy cost sum consumed by a source node and the node.

6. The method according to claim 5, further comprising: determining candidate nodes that can be selected as the relay node from each node in the wireless relay network according to the energy price of each node and the link information, wherein, according to the energy price of each node and the link information, determining, in the case that each node is selected as the relay node, the power allocation corresponding to the minimum value of the energy cost sum consumed by the source node and the node comprises: according to the energy price of each candidate node and link information of each candidate node, determining, in the case that each candidate node is selected as the relay node, power allocation corresponding to the minimum value of the energy cost sum consumed by the source node and the candidate node; and
based on the power allocation and the energy price of each node, determining the node and power allocation corresponding to the minimum value of the objective function used when the power allocation is performed for each node as the relay node and power allocation for data transmission, respectively comprises: based on the power allocation and energy price of each candidate node, determining the candidate node and power allocation corresponding to the minimum value of the energy cost sum used when the power allocation is performed for each candidate node as the relay node and power allocation for data transmission, respectively.

7. A communication device for selecting a relay node and allocating power in a wireless relay network, comprising:

an acquiring module, configured to acquire an energy price of each node in a wireless relay network, and link information about links between each node and its neighboring nodes, wherein the energy price is determined according to the following rule: the fewer residual energy of a node is, the higher an energy price of the node is;
a first determining module, configured to: according to the energy price of each node and the link information, determine, in the case that each node is selected as a relay node, power allocation corresponding to a minimum value of an objective function that is based on the energy price of the node; and
a second determining module, configured to: based on the power allocation and the energy price of each node, determine the node and power allocation corresponding to the minimum value of the objective function used when the power allocation is performed for each node as the relay node and power allocation for data transmission, respectively.

8. The communication device according to claim 7, wherein, the acquiring module is configured to acquire the energy price of each node in the wireless relay network and link information about links between each node and its neighboring nodes, wherein the energy price can be determined as a price that is in proportion to a power function of a ratio of initial total energy of the node to residual energy of the node.

9. The communication device according to claim 8, wherein, the acquiring module is configured to acquire the energy price of each node in the wireless relay network and link information about links between each node and its neighboring nodes, wherein the energy price can be determined as a price that is in proportion to a one-order or two-order power function of a ratio of the initial total energy of the node to the residual energy of the node.

10. The communication device according to any one of claims 7 to 9, wherein, the first determining module is configured to, according to the energy price of each node and the link information, determine, in the case that each node is selected as the relay node, power allocation corresponding to a minimum value of the energy cost sum consumed by a source node and this node.

11. The communication device according to claim 10, further comprising: a third determining module, configured to determine candidate nodes that can be selected as the relay node from each node in the wireless relay network according to the energy price of each node and the link information,
wherein, the first determining module is configured to, according to the energy price of each candidate node and link information of each candidate node, determine, in the case that each candidate node is selected as the relay node, the power allocation corresponding to the minimum value of the energy cost sum consumed by the source node and the candidate node; and
the second determining module is configured to, based on the power allocation and energy price of each candidate node, determine the candidate node and power allocation corresponding to the minimum value of an energy cost sum used when the power allocation is performed for each candidate node as the relay node and power allocation for data transmission, respectively.

100

Acquire an energy price of each node in a wireless relay network, and link information about links between each node and its neighboring nodes, wherein the energy price is determined according to a following rule: the fewer residual energy of a node is, the higher the energy price of the node is ⎯ S110

According to the energy price of each node and the link information, determine, in the case that each node is selected as a relay node, power allocation corresponding to a minimum value of a objective function that is based on the energy price of the node ⎯ S120

Based on the power allocation and energy price of each node, determine the node and power allocation corresponding to the minimum value of the objective function used when the power allocation is performed for each node as the relay node and power allocation for data transmission, respectively ⎯ S130

FIG. 1

(a) Phase 1         (b) Phase 2 ($\mathbf{R}^{opt} = \mathbf{R(2)}$)

(C) Two-phase timeslot allocation

FIG. 2

FIG. 3

200

Acquire an energy price of each node in a wireless relay network, and link information about links between each node and its neighboring nodes, wherein the energy price is determined according to a following rule: the fewer residual energy of a node is, the higher the energy price of the node is — S210

According to the energy price of each node and the link information, determine candidate nodes in all nodes of the wireless relay network that can be selected as the relay node — S220

According to the energy price and link information of each candidate node, determine, in the case that the each candidate node is selected as the relay node, the power allocation corresponding to the minimum value of energy cost sum consumed by the source node and the candidate node — S230

Based on the power allocation and energy price of each candidate node, determine a candidate node and power allocation that correspond to the minimum value of energy cost sum of each candidate node in power allocation as the relay node and power allocation for data transmission, respectively — S240

FIG. 4

FIG. 5

FIG. 6

FIG. 7

FIG. 8

Communication device 300

Acquiring module 310

First determining module 320

Second determining module 330

FIG. 9

Communication device 400

Acquiring module 410

Third determining module 440

First determining module 420

Second determining module 430

FIG. 10

# INTERNATIONAL SEARCH REPORT

| International application No. |
|---|
| PCT/CN2011/071283 |

**A. CLASSIFICATION OF SUBJECT MATTER**

H04W40/02 (2009.01) i

According to International Patent Classification (IPC) or to both national classification and IPC

**B. FIELDS SEARCHED**

Minimum documentation searched (classification system followed by classification symbols)

IPC: H04W,H04Q,H04L,H04B

Documentation searched other than minimum documentation to the extent that such documents are included in the fields searched

Electronic data base consulted during the international search (name of data base and, where practicable, search terms used)

WPI,EPODOC,CPRS: energy, power, remain+, residual, price, cost, consumption, relay+, efficiency, adhoc, hop, sensor, aware

**C. DOCUMENTS CONSIDERED TO BE RELEVANT**

| Category* | Citation of document, with indication, where appropriate, of the relevant passages | Relevant to claim No. |
|---|---|---|
| A | CN1561509A(HONEYWELL INT INC) 05 Jan. 2005(05.01.2005) The whole document | 1-11 |
| A | CN101577956A(UNIV BEIJING POSTS & TELECOM) 11 Nov. 2009(11.11.2009) The whole document | 1-11 |
| A | CN101534538A(UNIV BEIJING POSTS & TELE UNIV ZHEJIANG TECHNOLOGY)16 Sept. 2009(16.09.2009)The whole document | 1-11 |
| A | WO2009057884A1 (ELECTRONICS&TELECOM RES INST) 07 May 2009(07.05.2009) The whole document | 1-11 |
| A | CN101141388A (UNIV WUHAN TECHNOLOGY) 12 Mar. 2008 （12.03.2008） The whole document | 1-11 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 10 May 2011(10.05.2011) | **02 Jun. 2011 (02.06.2011)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer GENG, Xiaofang Telephone No. (86-10)62411387 |
|---|---|

Form PCT/ISA /210 (second sheet) (July 2009)

## INTERNATIONAL SEARCH REPORT
### Information on patent family members

| International application No. |
| --- |
| PCT/CN2011/071283 |

| Patent Documents referred in the Report | Publication Date | Patent Family | Publication Date |
| --- | --- | --- | --- |
| CN1561509A | 05.01.2005 | WO03015452A2 | 20.02.2003 |
| | | JP2005526416T | 02.09.2005 |
| | | US7277414B2 | 02.10.2007 |
| | | AU2002326501A1 | 24.02.2003 |
| | | EP1415288A2 | 06.05.2004 |
| | | US2003063585A1 | 03.04.2003 |
| | | IN200400282P1 | 10.03.2006 |
| CN101577956A | 11.11.2009 | None | |
| CN101534538A | 16.09.2009 | None | |
| WO2009057884A1 | 07.05.2009 | US2010220653A1 | 02.09.2010 |
| | | KR100912820B1 | 18.08.2009 |
| | | KR20090044771A | 07.05.2009 |
| CN101141388A | 12.03.2008 | CN101141388B | 08.09.2010 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201010164382